(19) Europäisches Patentamt
European Patent Office
Office européen des brevets

(11) **EP 1 377 798 B1**

(12) **EUROPÄISCHE PATENTSCHRIFT**

(45) Veröffentlichungstag und Bekanntmachung des Hinweises auf die Patenterteilung:
**11.11.2009  Patentblatt 2009/46**

(51) Int Cl.:
***G01D 5/00*** *(2006.01)*

(21) Anmeldenummer: **02737765.4**

(22) Anmeldetag: **28.03.2002**

(86) Internationale Anmeldenummer:
**PCT/DE2002/001171**

(87) Internationale Veröffentlichungsnummer:
**WO 2002/084220 (24.10.2002 Gazette 2002/43)**

(54) **VERFAHREN ZUR UNTERDRÜCKUNG DER GEGENSEITIGEN BEEINFLUSSUNG EINES OPTISCHEN MEHRFACH-SENSORSYSTEMS UND ZUGEHÖRIGES MEHRFACH-SENSORSYSTEM**

METHOD FOR SUPPRESSING MUTUAL INTERFERENCE OF AN OPTICAL MULTI-SENSOR SYSTEM AND CORRESPONDING MULTI-SENSOR SYSTEM

PROCEDE SERVANT A ATTENUER LES INTERACTIONS DANS UN SYSTEME OPTIQUE A DETECTEURS MULTIPLES, ET SYSTEME DE DETECTION MULTIPLE CORRESPONDANT

(84) Benannte Vertragsstaaten:
**DE FR GB IT**

(30) Priorität: **10.04.2001  DE 10117896**

(43) Veröffentlichungstag der Anmeldung:
**07.01.2004  Patentblatt 2004/02**

(73) Patentinhaber: **SIEMENS AKTIENGESELLSCHAFT**
**80333 München (DE)**

(72) Erfinder: **SCHMITT, Manfred**
**92256 Hahnbach (DE)**

(56) Entgegenhaltungen:
**EP-A- 0 327 967     EP-A- 0 895 075**
**DE-A- 3 029 109**

EP 1 377 798 B1

**Beschreibung**

Die Erfindung betrifft ein Verfahren zur Unterdrückung der gegenseitigen Beeinflussung eines optischen Systems mit mehreren optischen Sensoren, gemäß Anspruch 1. Außerdem betrifft die Erfindung ein Mehrfachsensorsystem zur Durchführung des oben genannten Verfahrens, gemäß Anspruch 7.

Binäre Sensoren werden in großen Stückzahlen zur Automatisierung z.B. in der Automobilindustrie oder im Werkzeugmaschinenbau eingesetzt. Die Sensoren sind dabei mit der Steuerung bzw. der dezentralen Peripherie entweder über konventionelle Parallelverdrahtung oder über Feldbussysteme verbunden. EP 0 895 075, EP 0 327 967 oder DE 30 29 109 zeigen derartige Einrichtungen. Die hier bekannten Verfahren zur Unterdrückung der gegenseitigen Beeinflussung der optischen Sensoren und die eingesetzten optischen Mehrfachsensorsysteme werden im folgenden näher beschrieben.

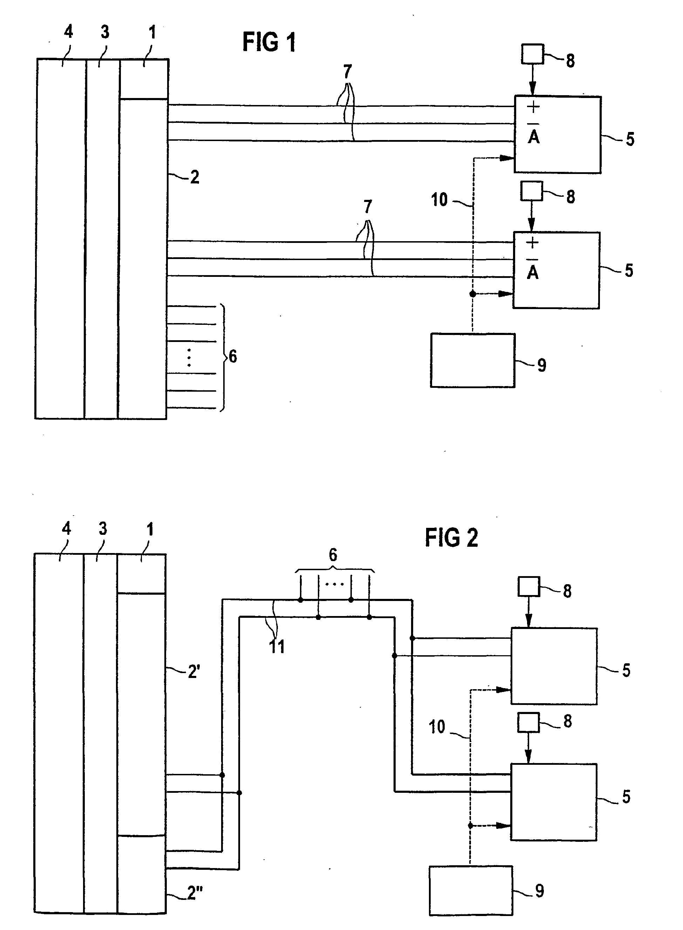

In FIG 1 ist schematisch ein Teil eines parallel verdrahteten Systems dargestellt. Es weist eine Zentraleinheit 1 mit einer Ein-/Ausgabebaugruppe 2 auf. Die Zentraleinheit 1 und die Baugruppe 2 sind über einen internen Steuerungsbus 3 miteinander sowie mit einer Stromversorgungsbaugruppe 4 verbunden. Nicht dargestellt in FIG 1 sind Aktuatoren, z.B. Magnetventile, die in praktisch jeder Anlage vorhanden sind. Zwei Sensoren 5 sind stellvertretend für alle weiteren Sensoren dargestellt, für welche nur Anschlüsse 6 symbolisch angedeutet sind.

Die Verbindung zwischen der Baugruppe 2 und den Sensoren 5 erfolgt in der Regel über eine Dreidrahtleitung 7. Zwei dieser Leitungen dienen der Energieversorgung, über die Dritte wird das Binärsignal vom Sensor 5 zur Baugruppe 2 übermittelt. Bei der Montage muss darauf geachtet werden, dass die einzelnen Leitungen der Dreidrahtleitung 7 korrekt angeschlossen werden, da es sonst zu Fehlfunktionen, im Extremfall sogar zur Zerstörung der Sensoren kommen kann.

In der Regel werden die Sensoren zwar mit Schutzmaßnahmen, wie Verpolschutz und Kurzschlussschutz versehen, dies ist jedoch relativ kostenaufwendig.

Die Sensoren 5 können auf unterschiedlichen Funktionsprinzipien beruhen. Beispielsweise können sie optische Sensoren 5 sein. Optische Sensoren 5 senden im Betrieb in der Regel periodisch nur in einem kurzen Zeitfenster einen entsprechend kurzen Lichtimpuls aus. Das Zeitfenster wird von einer sensorinternen Taktstufe gesteuert. Auch die Erfassung des ausgesendeten Lichts erfolgt nur in diesem Zeitfenster. Da alle Sensoren 5 autonom arbeiten und normalerweise nicht synchronisiert bzw. getriggert werden, kann es unter Umständen zu einer gegenseitigen Beeinflussung kommen, wenn die Zeitfenster zweier Sensoren 5 zufällig zusammenfallen und ein Sensor 5 den Lichtimpuls eines anderen Sensors 5 erfasst (Übersprechen).

Das Problem des Übersprechens kann dadurch beseitigt werden, dass zusätzliche Steuereingänge an den betreffenden Sensoren 5 vorhanden sind. Über die zusätzlichen Steuereingänge werden den einzelnen Sensoren 5 von einer zusätzlichen Steuereinheit 9 über zusätzliche Steuerleitungen 10 Ansteuerimpulse übermittelt. Dadurch können die Sensoren 5 zeitlich gestaffelt angesteuert werden, so dass ein Übersprechen ausgeschlossen ist.

In FIG 2 ist schematisch das gleiche Teilsystem wie in FIG 1 dargestellt, jedoch erfolgt hier die Schaltsignalübertragung vom Sensor zur Steuerung über ein Feldbussystem, was nachfolgend am Beispiel des Aktuator-Sensor-Interface (AS-I) erläutert wird. Die Spannungsversorgung 4, der interne Steuerungsbus 3, die speicherprogrammierbare Steuerung oder dezentrale Peripherie (SPS/DB) 1 und die Anschlüsse 6 zu weiteren Teilnehmern entsprechen denen in FIG 1. Das AS-Interface ist ein Feldbussystem zur Vernetzung von Sensoren und Aktuatoren. Dazu notwendig sind ein AS-I-Master 2', ein AS-I-Netzteil 2'' und spezielle Sensoren 5 mit integriertem Kommunikationschip, die alle über eine Zweidrahtleitung 11 (Daten und Energie für Teilnehmer) miteinander verbunden sind. Der AS-I-Master 2' wird anstelle einer Ein/Ausgabebaugruppe an die SPS/DP 1 angeschlossen und steuert lediglich den Datenaustausch zwischen SPS/DP und den Aktuatoren (nicht dargestellt) bzw. Sensoren 5. Hier wäre prinzipiell eine gezielte Triggerung der Sensoren durch die SPS/DP bei den zuvor beschriebenen Problem der gegenseitigen Beeinflussung (z.B. optischer Sensor) zwar möglich, allerdings ergibt sich der kleinste mögliche Triggerimpulsabstand zwischen zwei Sensoren aus der Anwenderprogrammzykluszeit bzw. der AS-I-Zykluszeit, wodurch eine "Echtzeit-Objekterfassung" durch den Sensor unmöglich ist. Praktisch bleibt daher auch nur die Lösung durch eine zusätzliche Steuereinheit 9 und zusätzliche Leitungen 10, wie sie schon vorher bei der Parallelverdrahtung beschrieben wurde.

Der Erfindung liegt die Aufgabe zugrunde, ein Verfahren zur Unterdrückung der gegenseitigen Beeinflussung bei optischen Sensoren ohne zusätzlichen Steuerungs- bzw. Verdrahtungsaufwand vorzuschlagen. Die weitere Aufgabe besteht darin, ein hierfür geeignetes Mehrfachsensorsystem anzugeben.

Die erste Aufgabe wird durch ein Verfahren der oben genannten Art mit folgenden Schritten gelöst:

a) An die Sensoren werden über die jeweils als Bus ausgeführte Leitung Kommunikationsaufrufe gesendet,
b) die Zeitfenster sind mit den Kommunikationsaufrufen synchronisiert,
c) wobei für die Sensoren zwischen zwei Kommunikationsaufrufen jeweils die gleiche Anzahl von Zeitfenstern vorgesehen ist.

Eine besonders vorteilhafte Weiterbildung des Verfahrens besteht, wenn der Zeitabstand zwischen zwei Kom-

munikationsaufrufen für jeden Sensor ein ganzzahliges Vielfaches seiner Zeitfensterabstände ist.

Weiterhin ist es vorteilhaft, wenn die Sensoren zwischen zwei Kommunikationsaufrufen die Lichtimpulse in gleichen Zeitfensterabständen aussenden.

Weitere vorteilhafte Ausbildungen der Erfindung sind den Unteransprüchen 4 bis 6 zu entnehmen.

Die weitere Aufgabe der Schaffung eines Mehrfachsensorsystems der oben genannten Art wird dadurch gelöst, dass die Leitungen jeweils als Bus zur Übertragung von Daten während eines Kommunikationsaufrufs durch ein Steuermodul dienen, dass das Steuermodul als Eingabebaugruppe vorgesehen ist, das zum Datenaustausch mit den Sensoren während des Kommunikationsaufrufs über den jeweils zugehörigen Bus dient, wobei über den Datenaustausch eine Parametrierung der Sensoren erfolgt, durch die die Synchronisation der Zeitfenster mit den Kommunikationsaufrufen festgelegt ist.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung

FIG 1, FIG 2 Steuerungssysteme des Standes der Technik,

FIG 3 ein Steuerungssystem mit einem Mehrfachsensor,

FIG 4 ein erfindungsgemäßes Verfahren zur Synchroni- sation von Zeitfenstern mit zeitgleichen Kom- munikationsaufrufen und entsprechend versetz- ten Zeitfenstern mit gleichen Zeitfensterab- ständen,

FIG 5 ein erfindungsgemäßes Verfahren zur Synchroni- sation von Zeitfenstern mit nicht zeitgleichen Kommunikationsaufrufen und gleichen Zeitfens- terabständen,

FIG 6 ein erfindungsgemäßes Verfahren zur Synchroni- sation von Zeitfenstern mit unterschiedlichen Kommunikationsaufrufabständen und ungleichen Zeitfensterabständen und

FIG 7 das Prinzip zur Unterdrückung der gegenseiti- gen Störlichtbeeinflussung am Beispiel von Re- flex-Lichtschranken.

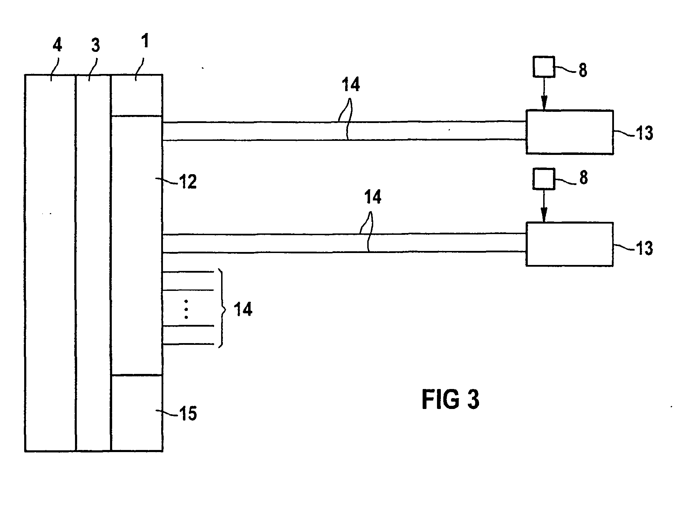

Das erfindungsgemäße Verfahren zur Unterdrückung der gegenseitigen Beeinflussung basiert auf einem Mehrfachsensorsystem mit Steuermodulen gemäß FIG 3. Das Mehrfachsensorsystem besteht aus einem Steuermodul 12 und mehreren Sensoren 13. Dabei sind in FIG 3 nur zwei Sensoren dargestellt, prinzipiell ist die Anzahl an Sensoren 13 aber beliebig. Die Sensoren 13 sind mit dem Steuermodul 12 über proprietäre Zweidrahtleitungen 14 verbunden. Über die Zweidrahtleitungen 14, die jedem Sensor 13 proprietär zugeordnet sind, werden sowohl die Sensoren 13 mit elektrischer Energie versorgt als auch Daten zwischen dem Steuermodul 12 und dem jeweiligen Sensorkopf 13 übermittelt.

Das Steuermodul 12 ist über den Steuerungsbus 3 mit der Zentraleinheit 1 und der Stromversorgungsbaugruppe 4 verbunden. Die Zentraleinheit 1 ist ferner über den Steuerungsbus 3 mit mindestens einer Ausgabebaugruppe 15 verbunden. Im Rahmen der vorliegenden Erfindung kommt es aber auf diese Ausgabebaugruppe 15 nicht an, so dass auf sie nachstehend nicht weiter eingegangen wird. Die Sensoren 13 können von der Steuerung bzw. dem Steuermodul 12 parametriert werden.

Die Beeinflussungsunterdrückung lässt sich mit dem oben genannten Mehrfachsensorsystem nach den folgenden Methoden realisieren:

- Zuordnung einzelner Zeitfenster zu jedem Sensor bei gleichem Zeitfensterabstand,
- Betrieb einzelner Sensoren mit unterschiedlichen Zeitfensterabständen,
- Kombination aus beiden Verfahren.

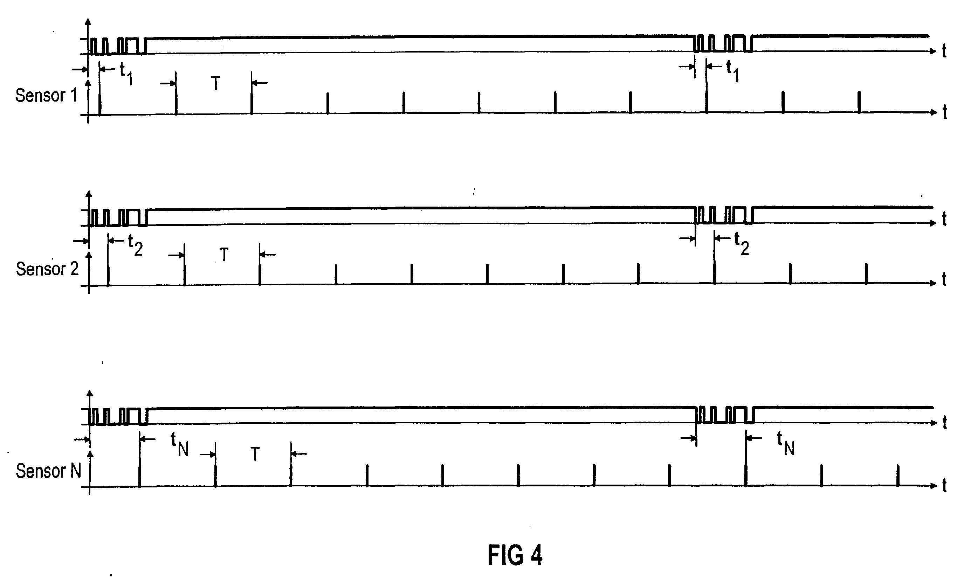

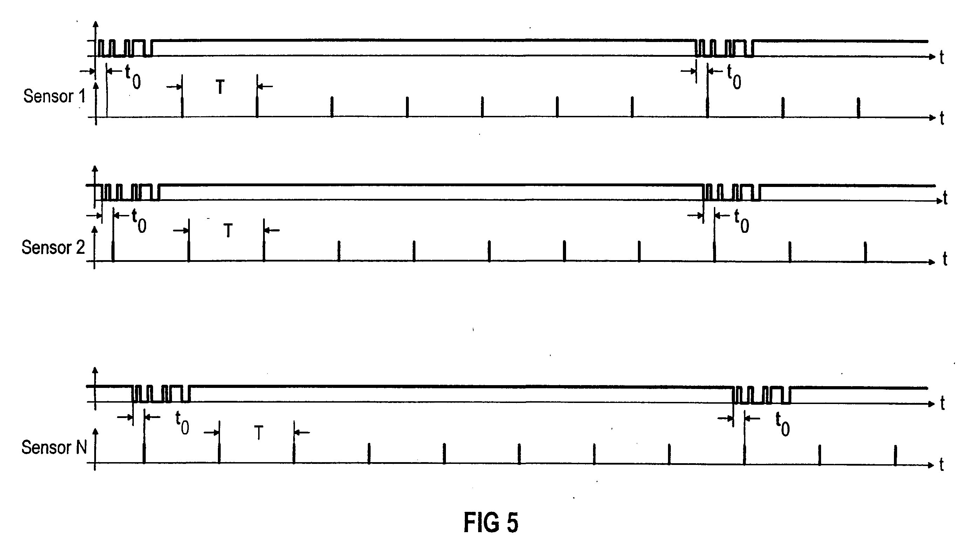

Gemäß FIG 4 ist der zeitliche Zusammenhang zwischen den Kommunikationsaufrufen des Steuermoduls 12 (oder mehrerer) und den Zeitfenstern, d.h. den Zeitbereichen, in denen die einzelnen optischen Sensoren 13 Licht aussenden und auch empfangene Lichtsignale auswerten, dargestellt. Jedem Sensor 13 (Nr. 1,2,...N) wird, z.B. über automatische Parametrierung durch das Steuermodul 12, ein eigenes auf den Kommunikationsaufruf durch das Steuermodul 12 bezogenes Zeitfenster mit der Bezugszeit $t_\mu$ zugeordnet. Der Abstand zwischen zwei Kommunikationsaufrufen ist dabei ein ganzzahliges Vielfaches der Zeitfensterabstände T, wobei mit jedem Kommunikationsaufruf neu synchronisiert wird, um Zeitfehler zu korrigieren. Dadurch ist gewährleistet, dass kein Sensor durch das Licht eines anderen gestört wird. Der gleiche Effekt lässt sich erreichen, wenn die Bezugszeit $t_0$ in jedem Sensor 13 gleich ist und die Kommunikationsaufrufe durch das Steuermodul 12 entsprechend zeitlich versetzt sind. Dieser Zusammenhang ist in FIG 5 dargestellt.

Die oben genannte Bedingung, dass der Abstand zwischen zwei Kommunikationsaufrufen ein ganzzahliges Vielfaches der Zeitabstände T ist, ist vorteilhaft, jedoch ist auch eine Lösung denkbar, bei der diese Bedingung nicht erfüllt ist. Eine Alternative bietet der Betrieb der einzelnen Sensoren 13 mit unterschiedlichen Zeitfensterabständen $T_1$, $T_2...T_N$. Voraussetzung für dieses Verfahren ist, dass in den Sensoren 13 die bewerteten Signale mehrerer aufeinanderfolgender Zeitfenster logisch miteinander verknüpft werden. Weiterhin sollen sich die Zeitfensterabstände $T_1$, $T_2...T_N$

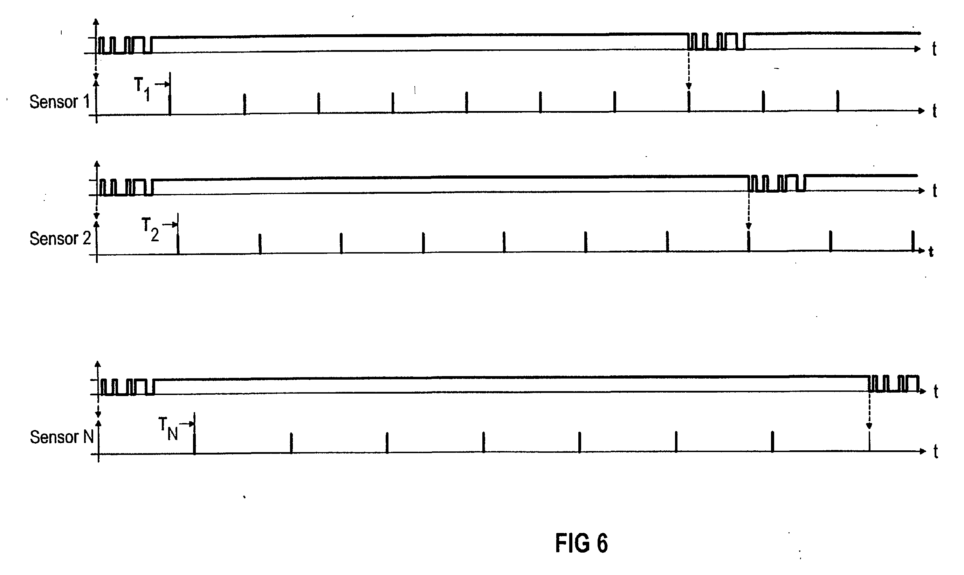

der einzelnen Sensoren 13 mindestens um jeweils eine Zeitfensterdauer unterscheiden (siehe FIG 6). Auch die Abstände der Kommunikationsaufrufe sind entsprechend angepasst und betragen ein ganzzahliges Vielfaches der Zeitfensterabstände.

| N = | | Anzahl der Sensoren |
| $Z$ | = | Anzahl der logisch verknüpften Lichtsignalbewertungen (Bit) |
| M = | | Mindestanzahl der unverfälschten Bit |
| $T_1$ | = | Zeitfensterabstand für Sensor Nr. 1 |
| $T_2$ | = | Zeitfensterabstand für Sensor Nr. 2 |
| | | • |
| | | • |
| $T_N$ | = | Zeitfensterabstand für Sensor Nr. N |
| $T_Z$ | = | Dauer eines Zeitfensters |
| $\Delta T =$ | = | Unterschied zwischen kürzestem und längstem Zeitfensterabstand |

Das Verfahren wird am Beispiel für die Sensorzahl N = 5 beschrieben, kann aber auf beliebige andere Werte übertragen werden, wenn die nachfolgenden Bedingungen eingehalten werden. Die Forderung dabei sei, dass von jedem anderen Sensor nur ein einziges Lichtfenster verfälscht wird. Weiterhin sollen beispielsweise M = 2 Lichtfenster unverfälscht sein. Das bedeutet dass

$$Z \quad = \quad M + N - 1 = 2 + 5 - 1 = 6$$

Zeitfenster (Bit) miteinander verknüpft werden müssen. Da es sich bei dem Beispiel um 5 Sensoren handelt, beträgt der Unterschied $\Delta T$ zwischen dem kürzesten und längsten Zeitfensterabstand

$$\Delta T \quad = \quad (N - 1) * T_Z = 4 * T_Z$$

Damit jeweils maximal ein Lichtfenster verfälscht wird, berechnet sich der kürzeste Zeitfensterabstand (Minimalwert) zu

$$T_1 \quad = \quad Z * \Delta T = 6 * 4 * T_Z = 24 * T_Z$$

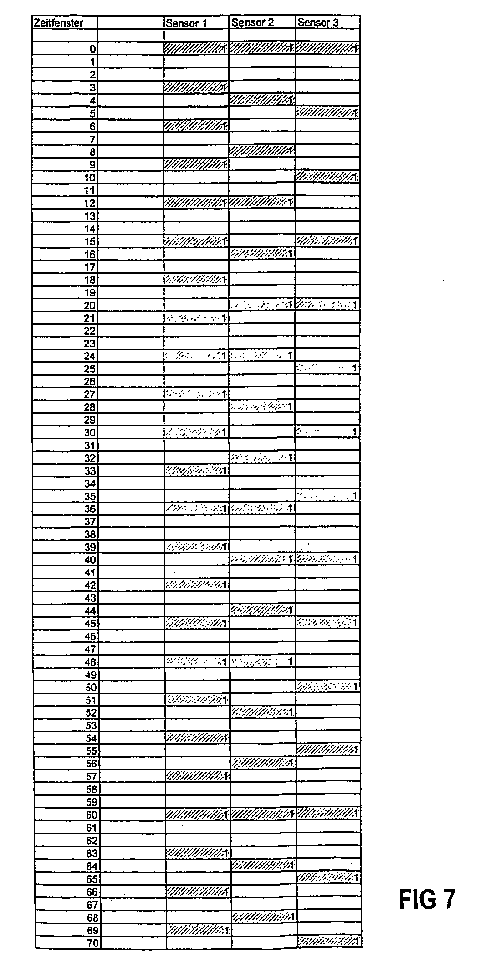

Die restlichen Zeitfensterabstände betragen demnach 25 $T_Z$ , 26 $T_Z$ , 27 $T_Z$ und 28 $T_Z$ .
Der Wert 24 * $T_Z$ für $T_1$ stellt dabei die Untergrenze dar, bei der die Bedingungen sicher erfüllt sind. Zum Teil gibt es Kombinationen mit kleineren Zahlenwerten, die ebenfalls die Anforderungen erfüllen
Wie schon vorher erwähnt, können beide Verfahren auch kombiniert werden.
Anhand der FIG 7 wird das Prinzip zur Unterdrückung der gegenseitigen Störlichtbeeinflussung am Beispiel von Reflex-Lichtschranken und der unten genannten Zahlenwerte erläutert. Bei Reflex-Lichtschranken wird der Lichtstrahl durch ein ggf. anwesendes Objekt unterbrochen, was bedeutet, dass in dem betreffenden Zeitfenstern kein Licht empfangen wird.

| Sensorzahl | N | = | 3 |
| Mindestanzahl unverfälschter Zeitfenster (Bit) | M | = | 1 |
| Anzahl der logisch miteinander verknüpften Bit | Z | = | 3 |
| Zeitfensterabstand Sensor Nr. 1 | $T_1$ | = | $3 * T_Z$ |
| Zeitfensterabstand Sensor Nr. 2 | $T_2$ | = | $4 * T_Z$ |
| Zeitfensterabstand Sensor Nr. 3 | $T_3$ | = | $5 * T_Z$ |

Nach der Formel der Anmeldeschrift würde der Minimalwert für $T_1 = 6 * T_Z$ betragen, das Beispiel ist aber eine Kombination, bei der, wie vorher erwähnt, bereits bei kleineren Werten für $T_v$ die Anforderungen erfüllt sind.

In der ersten Spalte von Figur 1 sind die einzelnen Zeitfenster von 0 bis 70 fortlaufend durchnummeriert, wobei in den Spalten 3 bis 5 diejenigen Fenster schraffiert sind, in denen die betreffenden Sensoren Licht aussenden und ggf. empfangen (Lichtfenster). Die Periodendauer des "Lichtmusters" ergibt sich aus dem Produkt der einzelnen Zeitfensterabstände 3 * 4 * 5 = 60, was bedeutet, dass alle möglichen Kombinationen erfasst sind. Da jedoch drei Lichtfenster (3 Bit) hintereinander miteinander verknüpft werden, ist die Tabelle um die Zeitfenster 61 bis 70 verlängert worden, welche wegen der Periodizität identisch sind zu den Zeitfenstern 1 bis 10.

Beim Sensor Nr. 1 werden beispielsweise nacheinander die Signale der Zeitfenster 0, 3und 6 (3 Bit), die Signale der Zeitfenster 3, 6 und 9 , die Signale der Zeitfenster 6, 9 und 12 und so weiter jeweils miteinander verknüpft. Die Verknüpfung in den beiden anderen Sensoren erfolgt analog zu deren Lichtfenstern.

Fallen die Lichtfenster von zwei oder mehreren Sensoren zusammen (z. B. Lichtfenster Nr. 0, 12, 15, 20 usw.) so kann es sein, dass beispielsweise im Lichtstrahl des Sensors Nr. 1 zwar ein Objekt vorhanden ist und dessen Lichtstrahl auch unterbrochen wurde, der Sensor trotzdem Licht von den anderen Sensoren empfängt.

Die Verknüpfungsbedingung lauten gemäß o.g. Zahlenwerten:

Wenn M = 1-mal in den Z = 3 Lichtfenstern kein Licht empfangen wird, dann ist ein Objekt im Strahlengang vorhanden!

Die Bedingung bedeutet, dass von den 3 verknüpften Lichtfenstern maximal 2 ggf. durch Licht der beiden anderen Sensoren (Fremdlicht) verfälscht sein dürfen, während das Lichtsignal des verbleibenden Lichtfensters ausschließlich vom Sensor selbst stammen kann und damit gültig ist.

Als Beispiel seien hier für den Sensor Nr. 1 die verknüpften Lichtfenster 9, 12 und 15, erwähnt, von denen das Lichtfenster 12 durch den Sensor Nr. 2 bzw. das Lichtfenster 15 durch den Sensor Nr. 3 ggf. verfälscht sein kann.

## Patentansprüche

1. Verfahren zur Unterdrückung der gegenseitigen Beeinflussung eines optischen Systems mit mehreren optischen Sensoren (13), die jeweils über eine eigene Leitung (14) mit einem Steuermodul (12) in Verbindung stehen und die innerhalb von Zeitfenstern Lichtimpulse aussenden und empfangen, wobei das zeitliche Auftreten der Zeitfenster gesteuert ist,

   mit den folgenden Schritten:

   a) an die Sensoren (13) werden über die jeweils eigenen Leitungen (14) Kommunikationsaufrufe gesendet,
   b) die Zeitfenster sind mit den Kommunikationsaufrufen synchronisiert,
   c) wobei für die Sensoren (13) zwischen zwei Kommunikationsaufrufen jeweils die gleiche Anzahl von Zeitfenstern vorgesehen ist und
   d) wobei die Kommunikationsaufrufe der Sensoren (13) einen gleichbleibenden Zeitbezug zueinander haben.

2. Verfahren nach Anspruch 1, wobei der Zeitabstand zwischen zwei Kommunikationsaufrufen für jeden Sensor ein ganzzahliges Vielfaches seiner Zeitfensterabstände T ist.

3. Verfahren nach Anspruch 1 oder 2, wobei die Sensoren (13) zwischen zwei Kommunikationsaufrufen die Lichtimpulse in gleichen Zeitfensterabständen aussenden.

4. Verfahren nach einem der oben genannten Ansprüche, wobei die Kommunikationsaufrufe für die Sensoren (13) zeitgleich erfolgen, und dass die Bezugszeit des nach jedem Kommunikationsaufruf zuerst auftretenden Zeitfensters für jeden Sensor (13) unterschiedlich ist, ohne dass sich zwei Zeitfenster verschiedener Sensoren (13) überlappen.

5. Verfahren nach einem der oben genannten Ansprüche, wobei die Kommunikationsaufrufe für die Sensoren (13) nicht zeitgleich erfolgen und die Bezugszeit des nach dem ersten Kommunikationsaufruf auftretenden Zeitfensters für jeden Sensor (13) gleich ist.

6. Verfahren nach Anspruch 2, wobei die Zeitfensterabstände (T) zwischen zwei aufeinanderfolgenden Zeitfenstern für die Sensoren sich mindestens um jeweils eine Zeitfensterdauer $\delta t$ unterscheiden.

7. Mehrfachsensorsystem mit mehreren optischen Sensoren (13), die jeweils über eine eigene Leitung (14) mit einem gemeinsamen Steuermodul (13) in Verbindung stehen und die innerhalb von Zeitfenstern Lichtimpulse aussenden und empfangen, wobei das Auftreten der Zeitfenster zeitlich gesteuert ist, und die Leitungen zur Übertragung von Daten während eines Kommunikationsaufrufes durch ein Steuermodul (12) dienen, das Steuermodul (12) als Eingabebaugruppe vorgesehen ist, das zum Datenaustausch mit den Sensoren (13) während des Kommunikationsaufrufs die jeweils zugehörige Leitung (14) dient, wobei über den Datenaustausch eine Parametrierung der Sensoren (13) erfolgt, durch die die Synchronisation der Zeitfenster mit den Kommunikationsaufrufen festgelegt ist und die Kommunikationsaufrufe der Sensoren (13) einen gleichbleibenden Zeitbezug zueinander haben.

## Claims

1. Method for suppressing mutual influencing in an optical system with a plurality of optical sensors (13), which are respectively connected to a control module (12) via a dedicated line (14) and which emit and receive light pulses within time windows, the temporal occurrence of the time windows being controlled,
comprising the following steps:

   a) communication calls are transmitted to the sensors (13) via the respective dedicated lines (14),
   b) the time windows are synchronized with the communication calls,
   c) in each case the same number of time windows being provided between two communication calls, for the sensors (13), and
   d) the communication calls of the sensors (13) having a constant time reference with respect to one another.

2. Method as claimed in Claim 1, wherein the time interval between two communication calls for each sensor is an integer multiple of its time window intervals T.

3. Method as claimed in Claim 1 or 2, wherein the sensors (13) emit the light pulses in identical time window intervals between two communication calls.

4. Method as claimed in one of the abovementioned claims, wherein the communication calls for the sensors (13) take place at the same time, and in that the reference time of the time window occurring first after each communication call is different for each sensor (13) without two time windows of different sensors (13) overlapping.

5. Method as claimed in one of the abovementioned claims, wherein the communication calls for the sensors (13) do not take place at the same time and the reference time of the time window occurring after the first communication call is identical for each sensor (13).

6. Method as claimed in Claim 2, wherein the time window intervals (T) between two successive time windows for the sensors differ at least by a time window duration $\delta t$ in each case.

7. Multiple sensor system with a plurality of optical sensors (13), which are respectively connected to a common control module (13) via a line (14) and which emit and receive light pulses within time windows, the occurrence of the time windows being controlled temporally, and the lines serve for the transfer of data during a communication call by a control module (12), the control module (12) is provided as an input assembly, the respectively associated line (14) serves for data exchange with the sensors (13) during the communication call, a parameterization of the sensors (13) taking place by way of the data exchange, said parameterization defining the synchronization of the time windows with the communication calls and the communication calls of the sensors (13) have a constant time reference with respect to one another.

## Revendications

1. Procédé de suppression de l'influence mutuelle d'un système optique ayant plusieurs capteurs ( 13 ) optiques, qui sont en liaison respectivement avec un modèle ( 12 ) de commande par une ligne ( 14 ) qui leur est propre et qui émettent et reçoivent des impulsions lumineuses dans des fenêtres de temps, l'apparition dans le temps de la fenêtre de temps étant commandée,
ayant les stades suivants :

   a ) des appels de communication sont émis sur les capteurs ( 13 ) par les lignes ( 14 ) qui leur sont propres respectivement,

b ) les fenêtres de temps sont synchronisées aux appels de communication,

c ) on prévoit pour les capteurs ( 13 ) respectivement le même nombre de fenêtres de communication entre deux appels de communication, et

d ) les appels de communication des capteurs ( 13 ) ont entre eux un rapport de temps qui reste le même.

**2.** Procédé suivant la revendication 1, dans lequel le laps de temps entre deux appels de communication est, pour chaque capteur, un multiple en nombre entier de ses intervalles ( T ) de la fenêtre de temps.

**3.** Procédé suivant la revendication 1 ou 2, dans lequel les capteurs ( 13 ) émettent entre deux appels de communication les impulsions lumineuses en de mêmes intervalles de fenêtre de temps.

**4.** Procédé suivant l'une des revendications mentionnées ci-dessus, dans lequel les appels de communication s'effectuent en même temps pour les capteurs ( 13 ) et en ce que le temps de référence de la fenêtre de temps se produisant en première après chaque appel de communication est différent pour chaque capteur ( 13 ) sans que deux fenêtres de temps de capteurs ( 13 ) différents se chevauchent.

**5.** Procédé suivant l'une des revendications mentionnées ci-dessus, dans lequel les appels de communication pour les capteurs ( 13 ) ne s'effectuent pas en même temps et le temps de référence de la fenêtre de temps se produisant après le premier appel de communication est le même pour chaque capteur ( 13 ).

**6.** Procédé suivant la revendication 2, dans lequel les fenêtres de temps qui se succèdent entre les intervalles ( T ) de fenêtre de temps sont différentes pour les capteurs au moins de respectivement une durée $\delta t$ de fenêtre de temps.

**7.** Système à capteurs multiples ayant plusieurs capteurs ( 13 ) optiques, qui sont reliés respectivement par une ligne ( 14 ) qui leur est propre à un module ( 13 ) de commande commun et qui émettent et reçoivent des impulsions lumineuses dans des fenêtres de temps, l'apparition des fenêtres de temps étant commandée dans le temps et les lignes servant par un module ( 12 ) de commande à la transmission de données pendant un appel de communication, le module ( 12 ) de commande étant prévu sous la forme d'un module d'entrée, qui sert respectivement la ligne ( 14 ) associée pour l'échange de données avec les capteurs ( 13 ) pendant l'appel de communication, dans lequel il est fixé, par l'échange de données, une paramétrisation des capteurs ( 13 ), paramétrisation par laquelle la synchronisation des fenêtres de temps aux appels de communication est fixée et les appels de communication des capteurs ( 13 ) ont entre eux une référence de temps qui reste la même.

EP 1 377 798 B1

**FIG 1**

**FIG 2**

8

FIG 3

**FIG 4**

FIG 5

FIG 6

| Zeitfenster | | Sensor 1 | Sensor 2 | Sensor 3 |
|---|---|---|---|---|
| 0 | | 1 | 1 | 1 |
| 1 | | | | |
| 2 | | | | |
| 3 | | 1 | | |
| 4 | | | 1 | |
| 5 | | | | 1 |
| 6 | | 1 | | |
| 7 | | | | |
| 8 | | | 1 | |
| 9 | | 1 | | |
| 10 | | | | 1 |
| 11 | | | | |
| 12 | | 1 | 1 | |
| 13 | | | | |
| 14 | | | | |
| 15 | | 1 | | 1 |
| 16 | | | 1 | |
| 17 | | | | |
| 18 | | 1 | | |
| 19 | | | | |
| 20 | | | 1 | 1 |
| 21 | | 1 | | |
| 22 | | | | |
| 23 | | | | |
| 24 | | 1 | 1 | |
| 25 | | | | 1 |
| 26 | | | | |
| 27 | | 1 | | |
| 28 | | | 1 | |
| 29 | | | | |
| 30 | | 1 | | 1 |
| 31 | | | | |
| 32 | | | 1 | |
| 33 | | 1 | | |
| 34 | | | | |
| 35 | | | | 1 |
| 36 | | 1 | 1 | |
| 37 | | | | |
| 38 | | | | |
| 39 | | 1 | | |
| 40 | | | 1 | 1 |
| 41 | | | | |
| 42 | | 1 | | |
| 43 | | | | |
| 44 | | | 1 | |
| 45 | | 1 | | 1 |
| 46 | | | | |
| 47 | | | | |
| 48 | | 1 | 1 | |
| 49 | | | | |
| 50 | | | | 1 |
| 51 | | 1 | | |
| 52 | | | 1 | |
| 53 | | | | |
| 54 | | 1 | | |
| 55 | | | | 1 |
| 56 | | | 1 | |
| 57 | | 1 | | |
| 58 | | | | |
| 59 | | | | |
| 60 | | 1 | 1 | 1 |
| 61 | | | | |
| 62 | | | | |
| 63 | | 1 | | |
| 64 | | | 1 | |
| 65 | | | | 1 |
| 66 | | 1 | | |
| 67 | | | | |
| 68 | | | 1 | |
| 69 | | 1 | | |
| 70 | | | | 1 |

**FIG 7**

**EP 1 377 798 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0895075 A
- EP 0327967 A
- DE 3029109